Europäisches Patentamt

European Patent Office

Office européen des brevets

(19)

(11) Veröffentlichungsnummer: **0 052 869**

**A2**

(12) # EUROPÄISCHE PATENTANMELDUNG

(21) Anmeldenummer: **81109787.2**

(22) Anmeldetag: **20.11.81**

(51) Int. Cl.³: **B 29 C 17/03**
**A 47 K 3/00, A 47 K 3/02**
**A 47 K 3/16**

(30) Priorität: **24.11.80 DE 8031200 U**

(43) Veröffentlichungstag der Anmeldung:
**02.06.82 Patentblatt 82/22**

(84) Benannte Vertragsstaaten:
**AT BE CH DE FR GB IT LI LU NL SE**

(71) Anmelder: **ARTS & SPECIALS**
**Kunsthandelsgesellschaft mbH**
**Weissenburgstrasse 16**
**D-7000 Stuttgart 1(DE)**

(72) Erfinder: **Preissing, Rolf Roland**
**Rechbergstrasse 54**
**D-7301 Deizisau(DE)**

(72) Erfinder: **Saur, Karl**
**Untere Heckenstrasse 39**
**D-7000 Stuttgart 61(DE)**

(74) Vertreter: **Patentanwälte Ruff und Beier**
**Neckarstrasse 50**
**D-7000 Stuttgart 1(DE)**

(54) Wanne für den Sanitärbereich und Verfahren zu ihrer Herstellung.

(57) Eine Wanne für den Sanitärbereich besitzt einen Innenmantel aus thermoplastischem Kunststoff und eine Stützkonstruktion hierzu. Die Stützkonstruktion ist gleichzeitig die Form, in der der Innenmantel durch Tiefziehen eingeformt ist. Die Form ist also Matrize und Wannenstütze.

FIG. 1

0052869

Wanne für den Sanitärbereich und Verfahren
zu ihrer Herstellung

Die Erfindung betrifft eine Wanne für den Sanitärbereich mit
einem Innenmantel aus einem tiefgezogenen thermoplastischen
Kunststoff, der mit einer Stützkonstruktion fest verbunden ist,
und ein Verfahren zu ihrer Herstellung.

Wannen, insbesondere Badewannen mit einem Innenmantel aus
Kunststoff sind in verschiedener Form bekannt. Anstelle der
bisher üblichen emaillierten Badewannen aus Gußeisen oder
Stahl werden heute vielfach die sog. Acrylwannen hergestellt
und eingebaut. Diese Wannen bestehen aus einem durch Tiefziehen aus einer entsprechend eingefärbten Acrylharzplatte
hergestellten Formkörper, der für den Einbau in geeigneter Weise abgestützt wird. Auf der anderen Seite ist es aber auch üblich, reparaturbedürftige Wannen nicht durch neue Wannen zu ersetzen, sondern zu renovieren. Hierzu kann der Wannenkörper einer alten Badewanne mit einer Kunststoffmasse oder
einem Anstrich beschichtet werden. Eine solche Badewannenneubeschichtung ist jedoch nur eine Notlösung und sieht in
vielen Fällen auch nicht schön aus. Es ist auch bekannt,
tiefgezogene Wanneneinsätze aus Kunststoff in alte Wannen
einzusetzen, so daß zumindest die Wanneninnenseite wie eine neue Kunstharzwanne aussieht. Dieses Vorgehen ist jedoch
mit erheblichen Schwierigkeiten verbunden, die besonders
darauf zurückzuführen sind, daß herkömmliche Wannen, insbesondere Badewannen, keine einheitliche Form haben, sondern
sowohl in Breite und Höhe als auch in der Wölbung sehr unterschiedlich gestaltet sind. Deshalb muß der Hersteller
solcher Wanneneinsätze eine Vielzahl von Tiefziehformen vorrätig haben. Außerdem ist die renovierungsbedürftige Wanne
zuvor zu vermessen, um die am nächsten kommende Tiefziehform
auswählen zu können, die vorsichtshalber deutlich kleiner
gehalten wird als der Wannenkörper der alten Badewanne, damit der neue Einsatz auch paßt. Dadurch stets bedingte Hohlräume zwischen dem Wanneneinsatz und dem alten Wannenkörper
werden dann stellenweise hinterfüttert oder ausgeschäumt.
Auch ist das Anpassen des Randes des Einsatzes an gefliese
Wände mit Schwierigkeiten verbunden, sofern man nicht größere Fugen in Kauf nehmen will.

Der Erfindung liegt die Aufgabe zugrunde, eine Wanne für
den Sanitärbereich zu schaffen, bei der Innenmantel und
Stützkonstruktion in wirtschaftlicher Weise miteinander verbunden werden können, die so gebildete Wanne eine hohe Qualität besitzt und der Innenmantel und die Stützkonstruktion
in ihrer Form einander möglichst weitgehend entsprechen.

A 19 303 EP — 3 —

Diese Aufgabe wird dadurch gelöst, daß die Stützkonstruktion von der Form gebildet wird, in die der Innenmantel tiefgezogen ist. Zur Herstellung der Wanne wird somit eine solche Form verwendet, die als verlorene Form mit dem Innenmantel verbunden bleibt und als Stützkonstruktion für diesen dient. Als Wannen kommen insbesondere Badewannen, Duschbecken und Waschrinnen infrage. Dadurch daß die Stützkonstruktion als Matrize für die Herstellung des Innenmantels verwendet wird und dieser nach der Herstellung darin verbleibt, bilden sich keine Hohlräume, die ausgefüllt oder hinterfüttert zu werden brauchen oder eine ständige Gefahr für einen möglichen Durchbruch bedeuten können. Als Material für den Innenmantel kommen die für die Herstellung von Kunststoffbadewannen gebräuchlichen thermoplastischen Kunststoffe infrage, insbesondere Acrylharze und Hart-PVC.

Bei einer bevorzugten Ausführungsform der Erfindung wird somit die Form für das Tiefziehen des Innenmantels von dem Wannenkörper einer reparaturbedürftigen Wanne gebildet, d. h. zur Herstellung der Wanne wird der Innenmantel direkt in den Wannenkörper der reparaturbedürftigen Wanne tiefgezogen. Es ist aber auch möglich, bei der Herstellung von neuen Wannen sog. Wannenrohlinge vorzusehen, beispielsweise solche, wie sie für eine nachfolgende Emaillierung hergestellt werden, und in diese Rohlinge dann den Innenmantel durch Tiefziehen einzuformen. Der Innenmantel ist vorteilhafterweise mit der Form verklebt, wozu eine vollflächige Verklebung vorgesehen sein kann. Je nach Herstellungsart reicht aber auch eine Verklebung am Rand und/oder am Boden aus.

Luftabsaugöffnungen in der Form sind vorzugsweise an solchen Stellen vorgesehen, an denen die fertige Wanne Ablauf- oder Oberlauföffnungen besitzt. Sind zusätzliche oder alternative Luftabsaugöffnungen an solchen Stellen der Form vorgesehen, die vom Innenmantel der Wanne überdeckt sind, dann sind diese Öffnungen vorzugsweise sehr klein oder siebartig ausgebildet, um eine Abformung der Öffnungsränder beim Tiefziehen des Innenmantels zu vermeiden.

Die Materialstärke der Platte, aus der der Innenmantel tiefgezogen wird, kann in weiten Grenzen variieren, was u. a. von der Festigkeit der als Stützkonstruktion dienenden Tiefziehform abhängt und davon, ob eine vollflächige und bleibende Verbindung zwischen Innenmantel und Tiefziehform vorgesehen ist oder nicht. In der Regel liegt die Materialstärke der für das Tiefziehen verwendeten Platte, die auch Platine genannt wird, zwischen 3 und 8 mm, vorzugsweise bei ca. 5 bis 6 mm.

Die Herstellung der Wanne kann am Standort eines bereits montierten Wannenkörpers erfolgen, indem die Platte in den Wannenkörper tiefgezogen wird. Es ist nicht erforderlich, die Wanne vom Platz zu bewegen. Es werden lediglich die Anschlußstutzen für Oberlauf- und Ablaufgarnituren gelöst und nach dem Tiefziehen des Innenmantels und Durchbrechen der entsprechenden Öffnungen unter Einbeziehung des Innenmantels wieder befestigt. Beim Tiefziehen wird die Luft aus der Form vorzugsweise durch bereits vorhandene Ablaßöffnungen der Wanne abgezogen. Zusätzlich oder anstelle dieser Öffnungen können jedoch auch besondere Entlüftungsöffnungen vorgesehen sein. Solche besonderen Entlüftungsöffnungen sind bei einer Badewanne vorzugsweise an den vier "Eckbereichen" des Bodens der Form vorgesehen.

Zum Herstellen des Innenmantels wird der Rand der Platte vor dem Tiefziehen mit dem Rand der Form zweckmäßigerweise über den gesamten Umfang luftdicht verbunden, insbesondere wärmebeständig verklebt. Dieses Verkleben ist besonders von Bedeutung bei der Herstellung des Innenmantels am Ort einer reparaturbedürftigen Wanne. Bei der vollständigen Neufertigung von Wannen durch Tiefziehen des Innenmantels in einen Rohling kann die Abdichtung jedoch auch durch andere herkömmliche Weise, beispielsweise durch abdichtendes Einspannen erfolgen. Vor dem Aufsetzen und Tiefziehen der Platte wird die Innenseite der Form vorzugsweise mindestens teilweise mit einem Kleber beschichtet, wobei wärmewirksame Kleber bevorzugt sind. Bei wandseitig montierten renovierungsbedürftigen Wannen können die Ränder der Platte bereits vor dem Tiefziehen an die Wand angepaßt werden, wobei in vielen Fällen sogar das Einführen der Ränder der Platte in eine Fuge möglich ist. Dadurch wird ein einwandfreier Wandabschluß der tiefgezogenen Innenform erzielt.

Der notwendige Unterdruck für den Tiefziehvorgang wird beim erfindungsgemäßen Verfahren mit Vorteil mit Hilfe einer Vakuumpumpe, ggf. unter Zwischenschaltung eines Unterdrucktankes erzeugt, wobei die Verbindung mit den Absaugöffnungen über Saugschläuche vorgenommen wird. Da gemauerte Wannen, insbesondere Badewannen in der Regel eine Revisionstür in der Mauer besitzen, ist das Einführen der Schläuche bis zu den Saugöffnungen durch solche Türen möglich. Ist eine solche Revisionstür nicht vorhanden, dann reicht in aller Regel Bohrungen im Bereich der Fliesenkreuze aus. In der Form bereits vorhandene, aber nicht zum Absaugen verwendete Öffnungen, beispielsweise der Oberlauf einer alten Badewanne, werden vor dem Tiefziehvorgang von überstehenden Teilen befreit und abgedichtet. Der Wannenablauf einer bereits bestehenden Wanne wird in der Regel als Absaugöffnung verwendet. Hierzu wird das Siphon und ggf. der Ablaufstutzen abmontiert und durch einen Sauganschluß ersetzt.

Die freien Ränder der Platte werden vorteilhafterweise über den Rand der Form umgelegt, so daß sich der Innenmantel der Form vollflächig anschmiegt. Dieses Umlegen kann vor, während oder nach dem Tiefziehen vorgenommen werden. Die für das Tiefziehen erforderliche Erwärmung der Platte aus dem thermoplastischen Material kann auf verschiedene Weise vorgenommen werden. Hierzu eignen sich beispielsweise Strahler. Bei einer bevorzugten Ausführungsform wird eine Heizmatte auf die zu erwärmende Platte aufgelegt und vorzugsweise an diese angesaugt. Hierzu eignen sich Matten mit Heizgitter und insbesondere Glasfasergewebe mit Kohle- bzw. Graphitbeschichtung, die vorzugsweise in ein Folienmaterial eingebettet sind. Eine Wärmeisolierung der Heizmatte an ihrer von der Platte abgewandten Seite ist vorteilhaft.

Um ein vollständiges Absaugen von Luft aus der Form auch an solchen Stellen zu erzielen, an denen sich das Material der Innenwand beim Tiefziehen vollflächig anlegt, ohne daß hier Absaugöffnungen vorgesehen sind, können diese Stellen mit einem dünnen luftdurchlässigen Material belegt werden, wozu sich insbesondere feine Gitter eignen, die eine Luftströmung entlang ihrer Fläche zulassen. Eine solche Zwischenlage ist beispielsweise am Boden einer renovierungsbedürftigen Badewanne von Vorteil, wenn lediglich an deren Ablaßöffnung Luft abgesaugt wird.

Weitere Vorteile und Einzelheiten der Erfindung ergeben
sich aus der nachfolgenden Beschreibung von bevorzugten
Ausführungsformen in Verbindung mit der Zeichnung und
den Ansprüchen.

In der Zeichnung zeigen:

Fig. 1   einen Längsschnitt durch eine Ausführungsform
         nach der Erfindung,

Fig. 2   einen Längsschnitt durch die Ausführungsform
         nach Fig. 1 in der Herstellungsphase,

Fig. 3   einen Längsschnitt durch eine andere Ausführungsform der Erfindung in der Herstellungsphase und

Fig. 4   eine Draufsicht auf die Ausführungsform nach

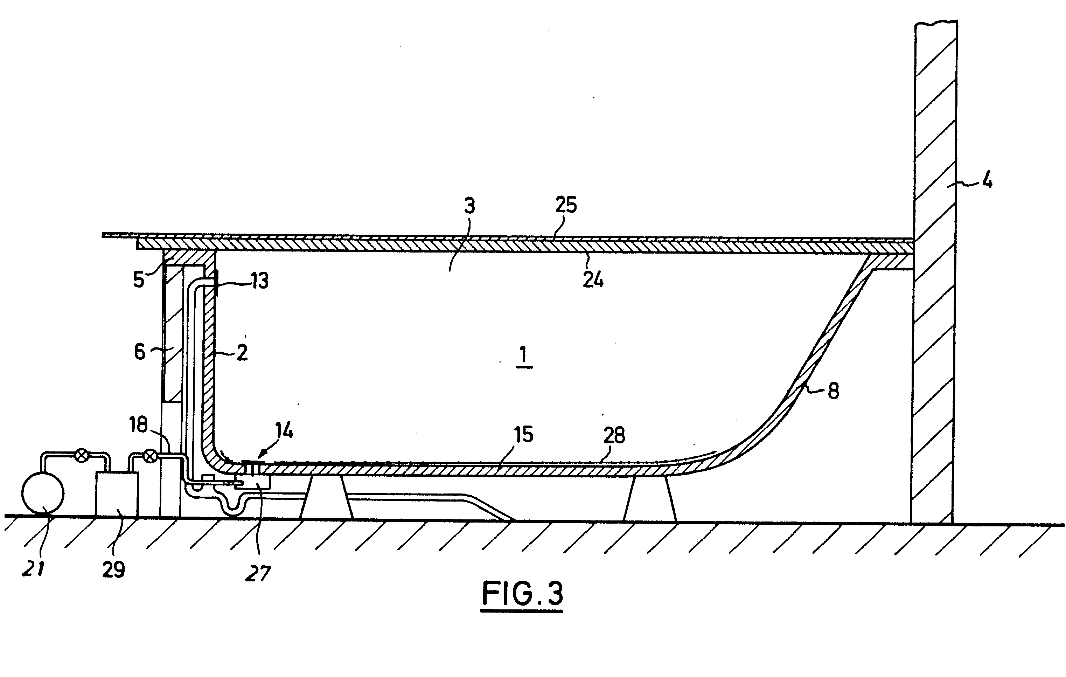

         Fig. 3 in der Herstellungsphase ohne Platte für den
         Innenmantel.

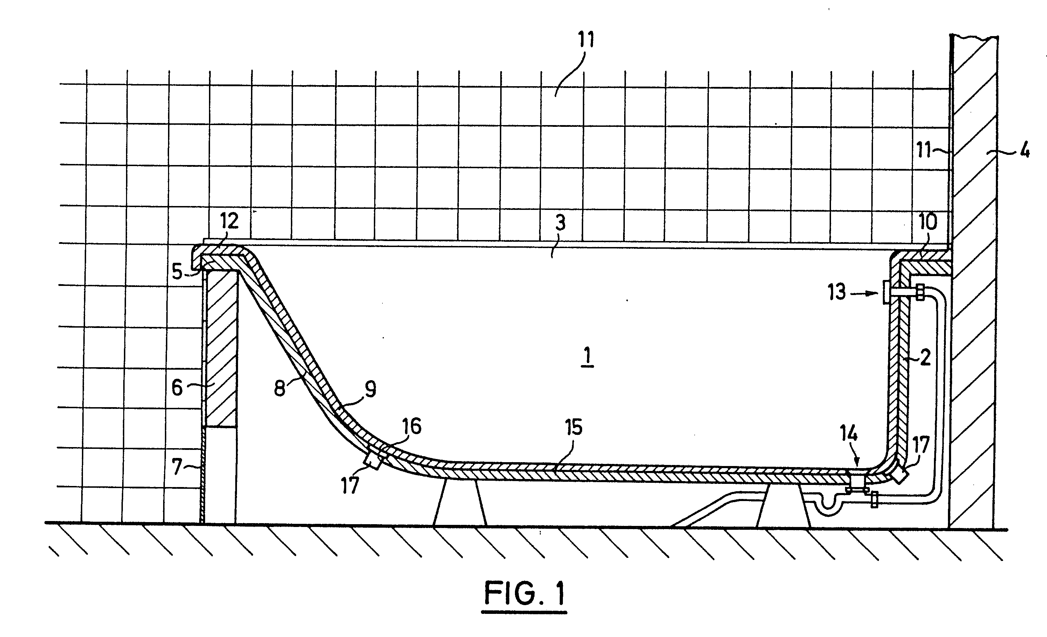

Bei der in Fig. 1 dargestellten Ausführungsform ist eine
Badewanne 1 in einem Badezimmer fest eingebaut. In üblicher Weise grenzt sie mit zwei Seiten 2 und 3 an gefliese
Wände 4 des Badezimmers an. Die beiden anderen Seiten der
Badewanne 1 sind bis zum Wannenrand 5 gemauert und ebenfalls gefliest, wobei eine der Mauern 6 eine Revisionstür 7 aufweist. Der gußeiserne oder stählerne Wannenkörper
8 ist emailliert, jedoch weist die Emaillierung aufgrund
langjähriger Benutzung oder sonstiger Beschädigungen eine
unschöne Oberfläche auf,  weshalb eine Neuschaffung der
Oberfläche erforderlich wurde.

Hierzu weist die Badewanne 1 einen Innenmantel 9 aus thermoplastischem Kunststoff, nämlich Acrylharz auf, der in
den alten Wannenkörper 8 durch Tiefziehen eingeformt ist
und diesem dadurch genau angepaßt ist. Der Innenmantel 9
ist mit dem Wannenkörper 8 durch Verklebung sowohl im Bereich der Ränder als auch der Wannenflächen fest verbunden. Die Außenränder 10 des Innenmantels 9 grenzen an die

0052869

A 19 303 EP                    - 8 -

Fliesen 11 der Wände 4 an und sind gegen diese in üblicher Weise abgedichtet. An der freien Seite der Badewanne 1 sind die Ränder 12 des Innenmantels 9 über den Rand 5 des alten Wannenkörpers 8 umgelegt und ebenfalls gegen die Fliesen der Ausmauerung abgedichtet.

Der Anschlußstutzen für den Oberlauf 13 der Wanne 1 und der Anschlußstutzen für den Ablauf 14 der Wanne übergreifen sowohl den neuen Innenmantel 9 als auch den alten Wannenkörper 8 unter beidseitiger Abdichtung. Der Innenmantel 9 hat eine durchschnittliche Materialstärke von ca. 3 bis 4 mm, wobei vom unterschiedlichen Materialfluß beim Tiefziehvorgang herrührende Schwankungen bestehen. Der Innenmantel liegt dem alten Wannenkörper 1 vollflächig ohne dazwischenliegende Hohlräume oder Füllmaterial an. Dadurch ist er in hervorragender Weise gegen ein versehentliches Durchstoßen gesichert. Im Bereich des Bodens 15 besitzt der Wannenkörper Bohrungen 16, in die siebartige Saugansätze 17 eingesetzt sind. Die dem Innenmantel 9 zugewandte Seite der Saugansätze 17 liegt bündig mit der Innenseite des alten Wannenkörpers 8, so daß sie am Innenmantel nicht als erhabene Stellen sichtbar sind. Die Bohrungen 16 und Siebeinsätze 17 fehlen dann, wenn die Absaugung für den Tiefziehvorgang allein durch den Wannenablauf erfolgt ist.

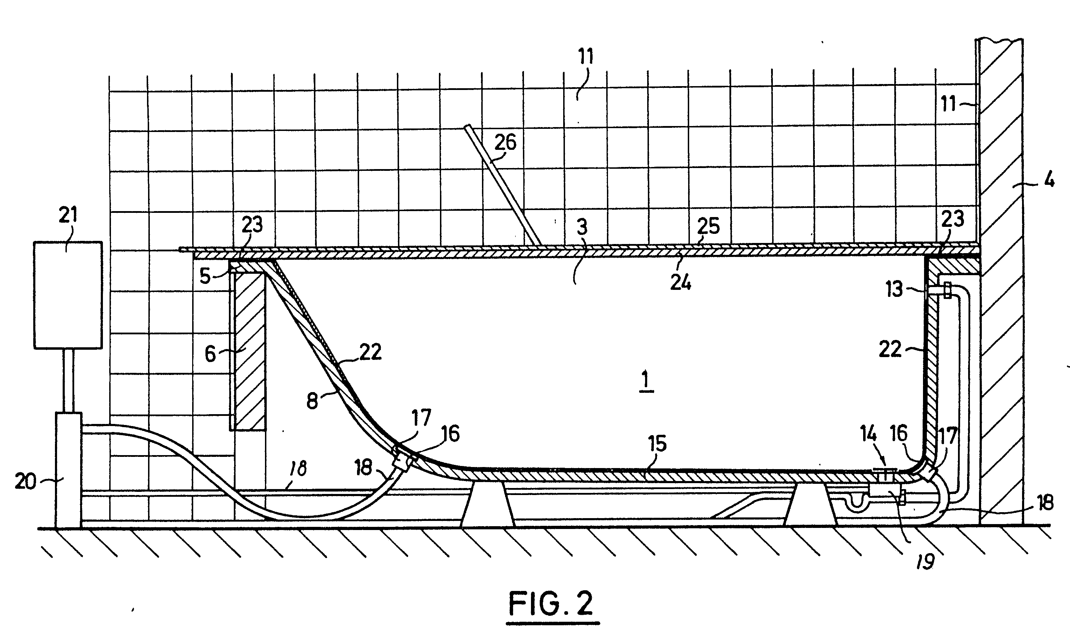

Aus Fig. 2 ist die Herstellung der Badewanne 1 ersichtlich. Zunächst wird der Wannenkörper 8 der Badewanne gereinigt. Vertiefungen in den Wannenoberfläche infolge von abgeplaztem Email werden ausgespachtelt. Der Anschlußstutzen für den Wannenüberlauf 13 wird abmontiert und die verbliebene Öffnung im Wannenkörper 8 dicht verschlossen. Dann werden an den abgerundeten Eckpunkten des Wannenbodens 15 vier Bohrungen 16 gebohrt, worauf durch diese Bohrungen flexible Wellen durch die Türöffnung 7 der geöffneten Revisionstür geführt werden. Mit Hilfe dieser flexiblen Wellen werden Saugschläuche 18 durch die Bohrungen 16 gezogen und an ihren Enden mit den Siebeinsätzen 17 versehen. Dort werden die Siebeinsätze 17 bündig mit der Innenfläche des Wannenkörpers 8 angeklebt. Es wird weiterhin der Anschlußstutzen für den Badewannenablauf 14 gelöst, worauf wiederum mit Hilfe einer biegsamen Welle ein Schlauch mit einem speziellen Absauganschluß 19 an diese Stelle gezogen und dort abdichtend befestigt wird. Die Saugschläuche 18 münden an ihren vom Wannenkörper 8 entfernten Ende in einen Verteiler 20, der an eine Vakuumpumpe 21 angeschlossen ist. Die Innenseite des Wannenkörpers 8 wird daraufhin vollflächig mit einem wärmehärtbaren Kleber 22, insbesondere einem Epoxidharzkleber, bestrichen. Auf den Wannenrand 5 wird nun eine 6 mm starke gegossene Platine aus thermoplastischem Sanitäracrylharz gelegt, die etwas größer ist als die Grundfläche der Wanne. Ihre dem Wannenrand entsprechende Auflagefläche wurde zuvor durch Anschleifen aufgerauht. Die zu den Wänden 4 weisenden Rändern der Platine werden, falls nötig so beschnitten, daß sie genau an die Fließen 11 der Wände anliegen. An den freien Rändern 5 des Wannenkörpers 8 stehen die Ränder 12 der Platine dagegen noch einige Zentimeter über. Daraufhin wird die Platine mit Hilfe eines bei Raumtemperatur aushärtbaren Zweikomponenten-Acrylatklebers 23, der nach dem Aushärten bis 180°C wärmebeständig ist, auf den Wannenrand 5 unter Ausbildung einer luftdichten Verbindung aufgeklebt. Hierzu kann die Platine im Bereich des Wannenrandes beschwert werden, um eine gute Verbindung zu erzielen. Auf die Platine 24 wird daraufhin ein flexibles elektrisch beheizbares Flächenheizelement 25 aufgelegt und an seinen Rändern mit Hilfe von abdichtenden Klebestreifen auf der Platine befestigt. Das Flächenheizelement ist mit einem Saugschlauch 26 verbunden, durch den Luft zwischen dem Flächenheizelement 25 und der Platine 24 abgesaugt und somit eine gute Wärmeübertragung vom Heizelement auf die Platine gewährleistet werden kann. Nach Aushärten des Klebers 23 am Wannenrand 5 wird mit der Beheizung der Platine 24 begonnen, wobei am Heizelement vorgesehene Thermofühler den Temperaturanstieg überwachen. Nach Erreichen einer Temperatur von 160$^{o}$C wird das Flächenheizelement abgenommen. Man wartet noch ca. 3 Minuten ab, um eine gleichmäßige Wärmeverteilung in der Platine zu erzielen, wonach über die Absaugschläuche 18 die Luft aus der Badewanne herausgepumpt und die Platine 24 in den Wannenkörper 8 tiefgezogen wird. Durch die Berührung mit der heißen Platine bindet der wärmewirksame Kleber 22 an der Oberseite des Wannenkörpers 8 ab, wodurch eine gute Flächenverbindung zwischen Wannenkörper 8 und dem durch die Platine gebildeten Innenmantel 9 gebildet wird. Danach werden die Öffnungen zur Befestigung der An-schlußstutzen von Überlauf 13 und Ablauf 14 aufgefräst, wonach die Anschlußstutzen wieder montiert werden. Die Saugschläuche 18 und der Absauganschluß 19 am Ablauf wer-den danach durch die Öffnung der Revisionstür wieder her-ausgezogen. Es erfolgt nunmehr ein Umlegen und gegebenenfalls Beschneiden des Randes 12 der Platine 24 bzw. des nunmehr gebildeten Innenmantels 9 sowie eine Abdichtung dieses Randes gegen die Fliesen 11. Die so gebildete Badewanne 1 entspricht in ihrem Aussehen einer neuen Badewanne, bietet durch den neuen Innenmantel 9 eine verbesserte Wärmeisolierung und ist außerordentlich stabil.

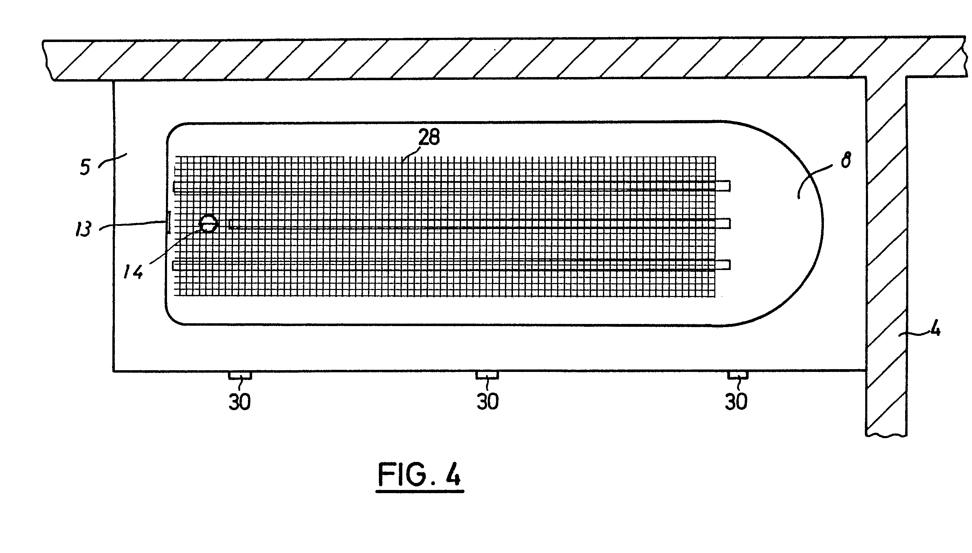

Bei der in den Fig. 3 und 4 dargestellten Ausführungsform der Erfindung wird im Vergleich zur vorstehenden Ausführungsform bei der Herstellung der Badewanne in etwas abgewandelter Weise vorgegangen. Einander entsprechende Teile sind jedoch mit den gleichen Bezugszeichen versehen. Der Wannenkörper 8 einer renovierungsbedürftigen Badewanne wird zunächst mit einem Haushaltsreiniger von Seifen- und Fettrückständen befreit. Dann wird eine etwa bestehende Silikonverfugung rings um den Wannenrand 5 beseitigt. Es wird nun eine Platine 24 auf den Wannenrand 5 gelegt, wobei diesmal eine 4 mm starke Hart-PVC-Platte verwendet wird. Die Paßgenauigkeit an den Fugen bzw. am Fliesenrand wird kontrolliert. Sollte die Wand oder die Hart-PVC-Platte nicht rechtwinklig sein, wird die Hart-PVC-Platte so zugeschnitten, daß ihre Ränder 10, die an der Wand 4 bzw. an den Fliesen 11 anliegen, in die zuvor von der Silikonverfugung befreiten Fugen passen. Danach werden die restlichen Ränder 12 der PVC-Platte 24 so zugeschnitten, daß sie ca. 15 cm an jeder Seite über die freistehenden Ränder 5 des Wannenkörpers 8 hinausragen.

Durch die Revisionstür, bzw. wenn eine solche nicht vorhanden ist, durch ein in die Mauer 6 gebrochenes Loch wird ein Saugschlauch, an dessen Ende sich ein an die freigelegte Öffnung des Ablaufs 14 anschließbarer Adapter 27 befindet, bis zum Ablauf geführt und dort befestigt, nachdem zuvor das Sieb entfernt und der Siphon etwas zur Seite gerückt worden war. Das Sieb bzw. das Oberteil des Anschlußstutzens wird gegen ein kleineres ausgetauscht, damit dieses später durch die Abflußbohrung des Innenmantels wieder herausgenommen werden kann. Der Boden des Wannenkörpers 8 wird nunmehr in Längsrichtung mit parallelen Streifen aus einem wärmehärtbaren Kleber versehen, wonach darauf ein feines nach Art eines Fliegengitters ausgebildetes bis in die Rundungen des Wannenkörpers reichendes Gitter 28, aufgelegt wird. Dadurch daß das Gitter an Kreuzungspunkten von Drähten dicker ist als die Einzeldrahtstärke, erlaubt es das Gitter 28, daß Restluft auch dann noch vom Boden und den Rundungen des Wannenkörpers durch den Ablauf 14 abgesaugt werden

kann, wenn sich der Innenmantel 9 bereits schon auf den Boden 15 des Wannenkörpers gelegt hat. Dadurch kommt man mit einer einzigen Absaugöffnung aus.

Nun wird der Wannenrand 5 mit einem zum Verkleben von Email mit Hart-PVC geeigneten Kleber (z.B. Bostic M 890) bestrichen. Ein solcher Kleber ist kurzfristig bis zu 240°C temperaturbeständig und vermag innerhalb von 10 Minuten weitgehend abzubinden. Der Wannenkörper 8 kann an seinen Innenseiten ebenfalls mit Kleber bestrichen werden, was jedoch nicht erforderlich ist. Als Kleber eignet sich beispielsweise ein solcher, der nach ca. 45 Minuten abbindet und unter Wärme aushärtet. Dadurch wird ein guter Verbund zwischen Innenteil und Wannenkörper erreicht.

Die Hart-PVC-Platte 24 wird nun auf den Wannenrand 5 gelegt und beschwert. Während der Abbindezeit des Klebers 23 zwischen Wannenrand 5 und den Rändern 10 und 12 der Platte 24 wird die Wannenöffnung für den Oberlauf 13, nachdem der Anschlußstutzen hierfür zuvor abgenommen wurde, von der Rückseite abgedichtet. Der Absaugschlauch 18 ist mit einem Vakuumtank 29 verbunden, an den seinerseits eine Vakuumpumpe 21 angeschlossen ist. Die Vakuumpumpe 21 wird eingeschaltet, wobei aber das Ventil des Vakuumtanks 2 zum Schlauch 18 zunächst geschlossen bleibt, so daß lediglich der Tank evakuiert wird. Der Tank ist stark verkleinert dargestellt.
Nunmehr werden auf der Oberfläche der Hart-PVC-Platte 24 Temperaturmeßpunkte ausgelegt, die bei Erreichen der gewünschten Verformungstemperatur des Hart-PVC einen Farbumschlag erfahren. Sobald die Hart-PVC-Platte mit dem Wannenrand verbunden ist, werden Wärmestrahler (Elstein-Strahler, in der Zeichnung nicht dargestellt) über der Hart-PVC-Platte angebracht und eingeschaltet. Die Strahler sind so ausgelegt, daß die gesamte Hart-PVC-Platte gleichmäßig erwärmt wird. Zeigen die ersten Temperaturmeßpunkte den gewünschten Farbumschlag, dann wird das Ventil am Vakuumtank 29 langsam geöffnet, so daß innerhalb von ca. 20 Sekunden die Luft vollständig aus der Wanne gesaugt und die nun weich gewordene Hart-PVC-Platte sich unter Bildung des neuen Innenmantels 9 genau an die emaillierte Wanne anlegt. Wie gesagt kann die Luft am Boden des Wannenkörpers 8 aufgrund des eingelegten Drahtgitters vollständig abgesaugt werden, so daß sich die Unterseite des Innenmantels 9 fest gegen das Gitter 28 anlegt und dort in Berührung mit dem streifenförmig aufgebrachten Kleber kommt und so mit dem Boden des Wannenkörpers 8 verklebt wird. Nach Abbinden des Klebers und Abkühlen, werden das Abfluß- und das Oberlaufloch durch Bohrfräser freigefräst und die Anschlußstutzen für Oberlauf 13 und Ablauf 14 wieder mit den alten oder mit neuen Blenden befestigt. Vor dem Durchfräsen von Abfluß- und Oberlaufloch ist es auch möglich, die durch den Innenmantel 9 neu gebildeten Wanne mit kaltem oder warmem Wasser zu füllen, um bei Verwendung von langsam aushärtenden Klebern eine gute Anpressung des Innenmantels 9 an die Innenwand des Wannenkörpers 8 zu gewährleisten. Das Vakuum bleibt angelegt, bis der Kleber ausgehärtet und der Innenmantel 9 erkaltet ist.

Die freistehenden Ränder 12 des Innenmantels 9 werden danach nochmals erwärmt und den Wannenrändern 5 der alten Wanne angepaßt. Hierzu können Spann- und Drückeinrichtungen 30 verwendet werden, die an der Ummauerung der Wanne befestigt sind und auch zur Fixierung der PVC-Platte auf dem Wannenrand während des Klebevorganges

A 19 303 EP — 14 —

dienen können. Zum Schluß werden Oberlauf und Ablauföffnungen freigefräst, die entsprechenden Garnituren
montiert und die Silikonfugen wieder mit einer Silikonmasse gefüllt und zwar so, daß die Schnittkanten des
neuen Innenmantels 9 vollkommen abgedeckt sind.

Wanne für den Sanitärbereich und Verfahren
zu ihrer Herstellung


A n s p r ü c h e


1. Wanne für den Sanitärbereich mit einem Innenmantel aus einem
   tiefgezogenen thermoplastischen Kunststoff, der mit einer
   Stützkonstruktion fest verbunden ist, dadurch gekennzeichnet, daß die Stützkonstruktion von der Form (8) gebildet
   wird, in die der Innenmantel (9) tiefgezogen ist.


2. Wanne nach Anspruch 1, dadurch gekennzeichnet, daß die
   Form von dem Wannenkörper (8) einer reparaturbedürftigen
   Wanne oder einem eigens dazu hergestellten Wannenrohling
   gebildet wird.

3. Wanne nach Anspruch 1 oder 2, dadurch gekennzeichnet, daß
   der Innenmantel (9) mindestens mit dem oberen Rand (5)
   der Form (8) und/oder mit deren Boden (15) verklebt ist.

4. Wanne nach einem der vorhergehenden Ansprüche, dadurch gekennzeichnet, daß Luftabsaugbohrungen (16) der Form (8),
   die vom Innenmantel (9) überdeckt sind, von gelochten
   Einsätzen (17) gebildet werden, die vorzugsweise siebartig ausgebildet sind.

5. Verfahren zur Herstellung von einen Kunststoffinnenmantel
   aufweisenden Wannen für den Sanitärbereich durch Tiefziehen einer Platte aus thermoplastischem Kunststoff in eine
   Form, dadurch gekennzeichnet, daß eine solche Form verwendet wird, die als verlorene Form mit dem Innenmantel
   verbunden bleibt und als Stützkonstruktion für diesen dient.

6. Verfahren nach Anspruch 5, dadurch gekennzeichnet, daß die
   Platte am Standort einer bereits montierten Wanne in deren
   Wannenkörper tiefgezogen wird.

7. Verfahren nach Anspruch 5 oder 6, dadurch gekennzeichnet,
   daß beim Tiefziehen die Luft aus der Form durch vorbestimmte, insbesondere bereits vorhandene Ablaßöffnungen und/
   oder durch besondere Entlüftungsöffnungen abgezogen wird.

8. Verfahren nach einem der Ansprüche 5 bis 7, dadurch gekennzeichnet, daß der Rand der Platte vor dem Tiefziehen
   mit dem Rand der Form über deren gesamten Umfang luftdicht verbunden, insbesondere wärmebeständig verklebt wird.

A 19 303 EP                    - 3 -

9. Verfahren nach einem der Ansprüche 5 bis 8, dadurch gekennzeichnet, daß die Forminnenseite vor dem Tiefziehen mindestens teilweise mit einem Kleber, insbesondere einem wärmewirksamen Kleber, beschichtet wird.

10. Verfahren nach einem der Ansprüche 5 bis 9, dadurch gekennzeichnet, daß die Platte mit einer aufgelegten, insbesondere
angesaugten Heizmatte auf die gewünschte Tiefziehtemperatur
erwärmt wird.

FIG. 1

FIG. 2

0052869  A 19 303  2

FIG.3

**FIG. 4**